# EUROPÄISCHE PATENTSCHRIFT

(11) **EP 0 807 044 B1**
(45) Veröffentlichungstag und Bekanntmachung des Hinweises auf die Patenterteilung: **28.04.1999**
(21) Anmeldenummer: 96901687.2
(22) Anmeldetag: 30.01.1996
(51) Int. Cl.: B60V 1/22

(54) **BODENEFFEKTFAHRZEUG**
GROUND-EFFECT VEHICLE
VEHICULE A EFFET DE SOL

(30) Priorität: 30.01.1995 DE 19502766
(43) Veröffentlichungstag der Anmeldung: 19.11.1997
(73) Patentinhaber: Blum, Klaus, 9400 Rorschacherberg (CH)
(72) Erfinder: BLUM, Klaus, CH-9400 Rorschacherberg (CH); BLUM, Albert, CH-8802 Kirchberg (CH)
(74) Vertreter: Patentanwälte Lippert, Stachow, Schmidt & Partner
(86) Internationale Anmeldenummer: DE9600127
(87) Internationale Veröffentlichungsnummer: WO9623686

(56) Entgegenhaltungen:
- FR-A- 1 411 219
- FR-A- 1 469 450
- US-A- 4 151 893

## Beschreibung

Die Erfindung betrifft ein Bodeneffektfahrzeug zum schnellen Transport von Personen und/oder Gütern, mit wenigstens einem Rumpf, einem Fahrwerk und Bodeneffekttragflächen, einer Leitwerkanordnung zur Richtungssteuerung und einer am Rumpf und/oder den Tragflächen befindlichen Antriebsvorrichtung in Form von Propeller- oder Fan-Triebwerken.

Die bisher bekannten Transportsysteme zum Transport von Personen und/oder Gütern zeigen verschiedene Nachteile, die insbesondere in der schlechten Wirtschaftlichkeit oder in der erheblichen Umweltbelastung zu sehen sind. Als kostengünstig können zwar große Schiffe angesehen werden, diese sind aber viel zu langsam und somit nicht in der Lage, in kurzer Zeit große Transportmengen zu bewältigen. Hovercrafts, bzw. Luftkissenfahrzeuge sind für mittlere Entfernungen nicht wirtschaftlich und sind außerdem zu langsam. Vorteilhaft ist bei Luftkissenfahrzeugen allerdings, daß mit diesen nahezu beliebige Küstenabschnitte ohne vorbereitete Hafenanlagen erreicht werden können.

Hydrofoil- oder Tragflächenboote können nur auf Wasserflächen eingesetzt werden und benötigen außerdem einen Tiefgang, so daß zum Be- und Entladen dieser Boote besondere Vorkehrungen zu treffen sind.

Bei Verkehrsflugzeugen ist festzustellen, daß diese zwar schnell sind, aber wegen der zu erreichenden Flughöhen unwirtschaftlich und umweltschädigend sind, da während des Steigfluges ein erheblicher Treibstoffverbrauch zu verzeichnen ist, der größer sein kann, als der während der übrigen Flugzeit. Verkehrsflugzeuge sind deshalb bei größeren Tonnagen über mittlere Distanzen nicht wirtschaftlich.

Auch hat sich bei den bisher bekannt gewordenen Bodeneffektfahrzeugen gezeigt, daß diese in der Herstellung teuer sind und beim Start einen erhöhten Leistungsbedarf aufweisen. Auch bedingt der Betrieb im Zusammenhang mit Wasser, daß die Konstruktion sehr stabil sein muß, da beispielsweise beim Start im Wasser und bei der Rückkehr ins Wasser sehr hohe Belastungen der gesamten Konstruktion durch die "Härte" des Wassers auftreten. Deshalb ist es erforderlich, die Schwimmer und die gesamte Konstruktion so auszubilden, daß diese den hohen Belastungen im Wasser - bei hoher Geschwindigkeit - gewachsen sind.

Aus der FR-A-1411219 ist beispielsweise ein Bodeneffektfahrzeug bekannt, das zum Transport großer Lasten sowie für eine große Passagierkapazität ausgelegt ist. In einer Amphibienversion ist dieses Bodeneffektfahrzeug praktisch als Ganz- oder Eintragflächenkonstruktion ausgebildet, bei der rumpfartige Pontons in die Bodeneffekttragfläche integriert sind. Die Bodeneffekttragfläche ist als Langsamflugprofil ausgelegt, wobei hauptsächlich der Innenraum der Bodeneffekttragfläche als Fracht- und Passagierraum genutzt ist. Ein Cockpit für die Fahrzeugbesatzung ist in einem zentralen Bereich der Bodeneffekttragfläche ausgebildet. Nicht zuletzt aufgrund der Amphibienbauweise dieses Bodeneffektfahrzeugs ist dessen Konstruktion außerordentlich voluminös und aufwendig. Aufgrund der hohen Transportkapazität hat dieses Fahrzeug auch einen erhöhten Leistungsbedarf.

Aus der FR-A-1469450 ist ein Luftkissenfahrwerk für herkömmliche Flugzeuge bekannt, das während der Startphase des Flugzeugs auftriebserhöhend wirkt. Hierzu wird zwischen den Tragflächen und dem Untergrund mittels an den Tragflächen angelenkter Klappen ein Stauraum gebildet, der über die Schuberzeuger des Flugzeugs mit Druck beaufschlagt wird, so daß ein sogenannter statischer Bodeneffekt erzeugt wird. Ein dynamischer Bodeneffekt, der bei geringer Flughöhe durch das besondere Profil und den Anstellwinkel der Tragflächen sowie durch Verdichtung der die Tragflächen anströmenden Fahrtluft unter diesen wirksam wird, der also mit zunehmender Fahrzeuggeschwindigkeit größer wird, ist mit dem in dieser Druckschrift beschriebenen Fahrwerk nicht erzielbar.

Ein Bodeneffektfahrzeug gemäß Oberbegriff von Anspruch 1 ist beispielsweise auch aus der US-PS 4,151,893 bekannt. Bei diesem Bodeneffektfahrzeug wird der Auftrieb durch Erzeugung eines dynamischen Luftkissens erzeugt, welches erst bei einer gewissen Fahrtgeschwindigkeit wirksam wird. Das dort beschriebene Fahrzeug ist ebenfalls ein Amphibienfahrzeug. Zur Verbesserung der Manövrierfähigkeit dieses Amphibienfahrzeugs bei reduzierter Fahrgeschwindigkeit, beispielsweise beim Rangieren in Häfen oder dergleichen, wird in der US-PS 4,151,893 vorgeschlagen, dieses Fahrzeug mit zusätzlichen Mitteln zur Erzeugung eines statischen Bodeneffekts auszustatten. Das dort beschriebene Fahrzeug ist eine Kombination aus Hovercraft bzw. Luftkissenfahrzeug und Bodeneffektfahrzeug. Dieses Fahrzeug ist ausschließlich auf Wasserflächen einsetzbar.

Der Erfindung liegt deshalb die Aufgabe zugrunde, ein Bodeneffektfahrzeug zu schaffen, das preisgünstig hergestellt und bei hoher Betriebssicherheit besonders wirtschaftlich betrieben werden kann.

Die der Erfindung zugrundeliegende Aufgabe wird durch die kennzeichnenden Merkmale des Anspruchs 1 gelöst.

Weitere vorteilhafte Ausgestaltungen der Erfindung gehen aus den Unteransprüchen hervor.

Die erfindungsgemäße Lösung erlaubt die Herstellung von besonders preisgünstigen Bodeneffektfahrzeugen, bei denen wesentliche Baugruppen, wie Flugzeugrumpf, Tragflächenteile, Hydraulik-, Steuerungs- und Regelungskomponenten, Fahrwerke etc. wieder verwendet werden. Dadurch ergibt sich zusätzlich eine besonders günstige Möglichkeit des Recyclings von Altflugzeugen.

Wie aus den Ansprüchen hervorgeht, können entweder nur ein Rumpf, oder zwei Flugzeugrümpfe verwendet werden. Letztere können katamaranartig miteinander verbunden werden. Das Tragflächen-Verbindungsteil besteht in diesem Fall ebenfalls aus einem Bodeneffekt- Tragflächenprofil. Durch die Katamaranbauweise wird eine stabile statische und dynamische Lage des Bodeneffektfahrzeuges erreicht. Durch das neue speziell für den Langsamflug ausgelegte Tragflächenprofil wird im Zusammenwirken mit dem Höhenruder eine absolut sichere Höhen- und Nickstabilität erreicht.

Die besonders kostengünstige Lösung wird durch die Wiederverwendung der wertvollen Bestandteile, wie zum Beispiel Tragflächen, Rumpf etc. und deren vorhandene statische Struktur erreicht, wobei das neue Tragflächenprofil dem Langsamflug im Bodeneffekt angepaßt wird. Es ist darauf zu achten, daß die vorhandenen Holme durch das neue Profil die gleichen statischen Daten beim Langsamflug erreichen, wie dies beim Schnellflug durch das vorhandene Profil der Fall war.

Alternativ kann auch das Altflugzeug vollständig erhalten bleiben und lediglich Bodeneffekttragflächen zusätzlich montiert werden. Die Montage kann dabei an der Unterseite der Tragflächen erfolgen. Da die Bodeneffekttragflachen eine erhebliche Dicke aufweisen, kann deren Innenraum vorteilhaft als Frachtraum genutzt werden.

Mit dem erfindungsgemäßen Bodeneffektfahrzeug sind verschiedene Betriebsarten möglich. So ist es möglich, dieses nur auf dem Wasser einzusetzen, was allerdings die Ausstattung mit Schwimmern und eine größere Antriebsleistung voraussetzt. Auch ist die Amphibium-Betriebsweise möglich, indem das Bodeneffektfahrzeug vom Land zum Wasser oder vom Wasser zum Land betrieben werden kann.

Die Betriebsweise von Land zu Land ist die wirtschaftlich günstigste, da nur ein Fahrwerk benötigt wird und Auftriebskörper nur zur Notwasserung erforderlich sind. In dieser Betriebsweise ist der niedrigste Treibstoffverbrauch gegeben, da die Startrollstrecke im Bodeneffekt kürzer ist, als bei Flugzeugen. Da der Steigflug entfällt, werden erhebliche Treibstoffmengen eingespart.

Aus vorgenannten Gründen weist das erfindungsgemäße Bodeneffektfahrzeug ein sehr günstiges Masse/Nutzlast-Verhältnis auf, da im Gegensatz zu Flugzeugen vergleichsweise wesentlich weniger Treibstoff mitgeführt werden muß, so daß sich die Nutzlast im gleichen Maße entsprechend dem Gewicht der eingesparten Treibstoffmenge erhöht.

Die Erfindung soll an nachfolgenden Ausführungsbeispielen erläutert werden. In den Zeichnungen zeigen:
- Fig. 1: ein Bodeneffektfahrzeug mit einem normalen Flugzeugrumpf und einer Bodeneffekttragfläche in Tiefdeckeranordnung;
- Fig. 2: ein Bodeneffektfahrzeug mit an vorhandenen Tragflächen befestigten Bodeneffekttragflächen;
- Fig. 3: die Vorderansicht eines Bodeneffektfahrzeuges nach Fig. 2;
- Fig. 3a: die perspektivische Darstellung des Bodeneffektfahrzeuges nach Fig. 3;
- Fig. 4: ein Bodeneffektfahrzeug mit einem Hochdecker-Flugzeugrumpf und mit im unteren Bereich des Rumpfes angeordneten Bodeneffekttragflächen in Tandemanordnung;
- Fig. 5: die schematische Darstellung der Anordnung von Frachtcontainern an der Unterseite der Bodeneffekttragfläche;
- Fig. 6: eine im Schnitt dargestellte Bodeneffekttragfläche mit integriertem Frachtraum;
- Fig. 7: eine katamaranartige Anordnung von zwei Flugzeugrümpfen mit zugehörigen Fan-Triebwerken; und
- Fig. 7a: die Vorderansicht des Bodeneffektfahrzeuges nach Fig.7 mit zwischen den Rümpfen befindlichem Luftkissen;
- Fig. 8: eine Ausführung des Bodeneffektfahrzeuges mit einem Luftkissenfahrwerk;
- Fig. 9: eine schematische Darstellung eines Schlauchbootfahrwerkes; und
- Fig. 10: eine schematische Darstellung eines Bodeneffektfahrzeuges mit Luftschläuchen als Fahrwerk.

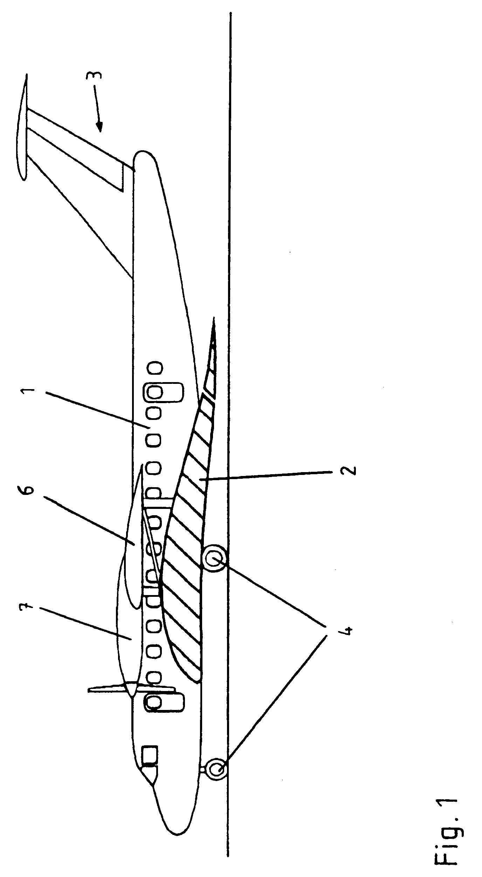

Aus Fig. 1 ist das Grundprinzip des Bodeneffektfahrzeuges ersichtlich, bei dem an einem Rumpf 1 eines Altflugzeuges anstelle der Tragflächen Bodeneffekttragflächen 2 in Verbindung mit einer vergrößerten Leitwerksanordnung 3 montiert sind. Die Bodeneffekttragflächen 2 sind als spezielles Langsamflugprofil ausgebildet. Die Bodeneffekttragflächen 2 können auch um den vorhandenen Holm des Tiefdeckers montiert werden.

Um energiesparende Start- und Landevorgänge zu erreichen, ist die Betriebsweise mit einem Fahrwerk 4 vorgesehen, wobei hierzu das bereits am Altflugzeug vorhandene Fahrwerk genutzt werden kann, welches auch mit anderen Fahrwerksarten, z.B. Luftkissenfahrwerken o.dgl. kombiniert werden kann.

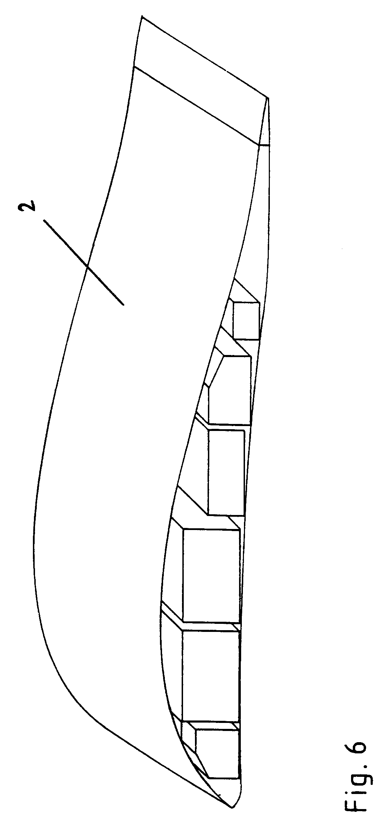

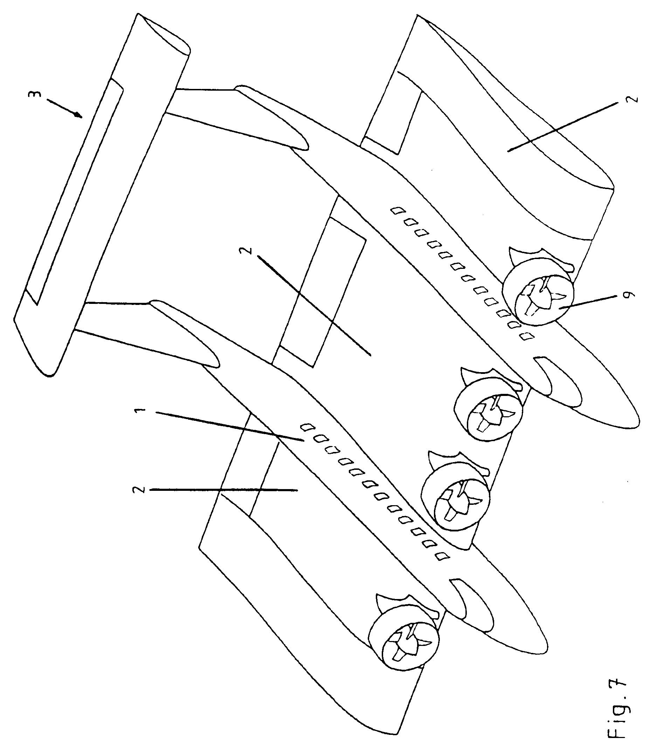

Die Bodeneffekttragflächen 2 sind immer als Langsamflugprofil ausgelegt, wobei diese im Verhältnis zur Tiefe eine große Dicke aufweisen. Damit besteht die Möglichkeit, den Innenraum der Bodeneffekttragflächen 2 als Frachtraum 5 (Fig. 6) zu nutzen, wobei zusätzliche Stützholme von Vorteil sind.

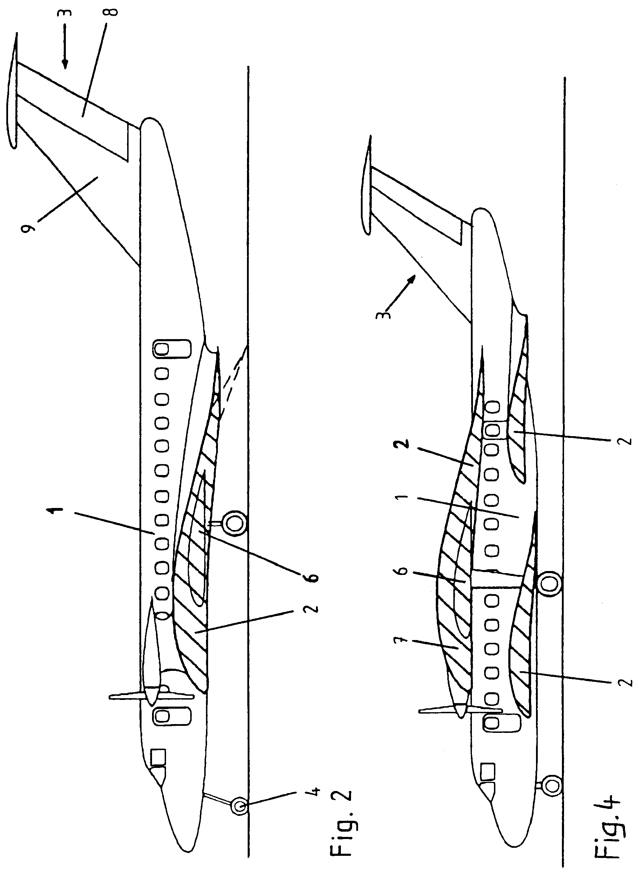

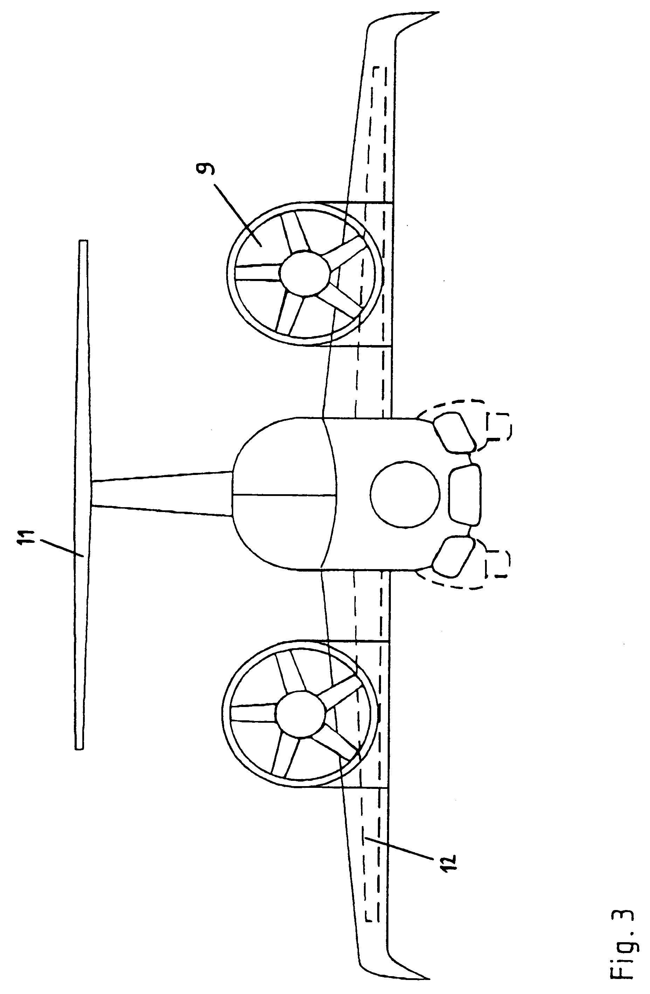

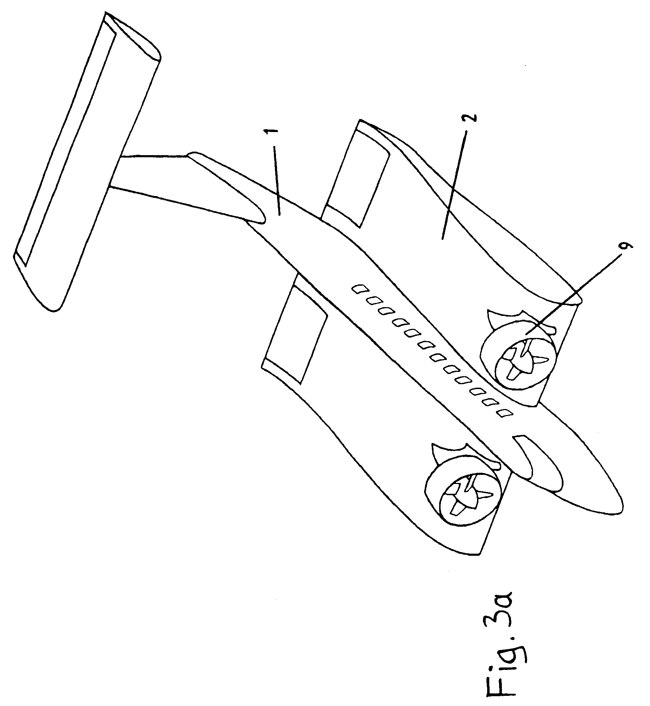

Fig. 1 zeigt ein Bodeneffektfahrzeug, bei dem die Bodeneffekttragflächen 2 unter die normalen Tragflächen 6 bei einem Hochdecker montiert sind. Die Tragflächen 6 können als Stummelflügel verkürzt und wie in Fig. 1 dargestellt, mit entsprechenden Triebwerken 7 versehen werden. Bessere Steuerungseigenschaften werden bei größeren Einheiten erreicht, wenn zusätzliche Triebwerke unmittelbar vor den Seitenleitwerken 8 angeordnet werden. Dadurch wird die Wendigkeit des Bodeneffektfahrzeuges im Langsamflug und am Boden verbessert. Die Haupttriebwerke sind in der Regel als Fan-Triebwerke 9 ausgebildet. Die Fig. 2,3 und 3a zeigen ein Bodeneffektfahrzeug, bei den die Bodeneffekttragflächen 2 um die vorhandenen Hauptholme 12 eines Tiefdeckers oder um dessen ursprünglichen Tragflächen 6 montiert sind.

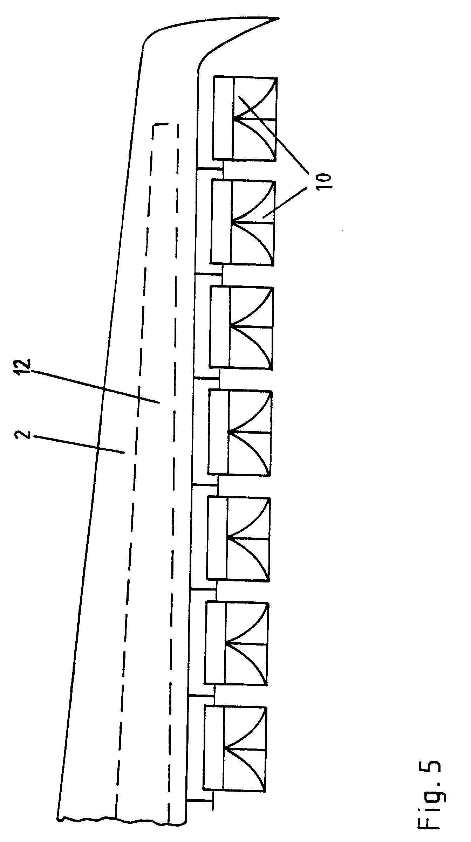

Aus Fig. 4 ist eine Variante des Bodeneffektfahrzeuges ersichtlich, bei der die Triebwerke 7 auf den oberen Bodeneffekttragflächen 2 angeordnet sind, die die oberen Tragflächen 6 umgeben. Es können auch die Originaltragflächen des Altflugzeugrumpfes wiederverwendet werden. Darüberhinaus können auch zusätzlich zwei Bodeneffekttragflächen 2 tandemartig im unteren Bereich seitlich des Rumpfes 1 angeordnet werden, wobei die hintere Bodeneffekttragfläche 2 gleichzeitig als Höhenleitwerk ausgebildet ist.

Das erfindungsgemäße Bodeneffektfahrzeug kann zum Transport von Lasten zusätzliche Transportbehälter 10 enthalten, die unter die Bodeneffekttragflächen 2 gehängt werden, wie dies aus Fig. 5 ersichtlich ist. Wird die äußere Form dieser Transportbehälter 10 nach aerodynamischen und hydrodynamischen Gesichtspunkten gestaltet, so können diese Transportbehälter 10 z.B. auch im Langsamflug über Wasserflächen abgesetzt werden. Diese Ausführung kann von besonderem Vorteil sein, etwa bei militärischen/paramilitärischen Operationen.

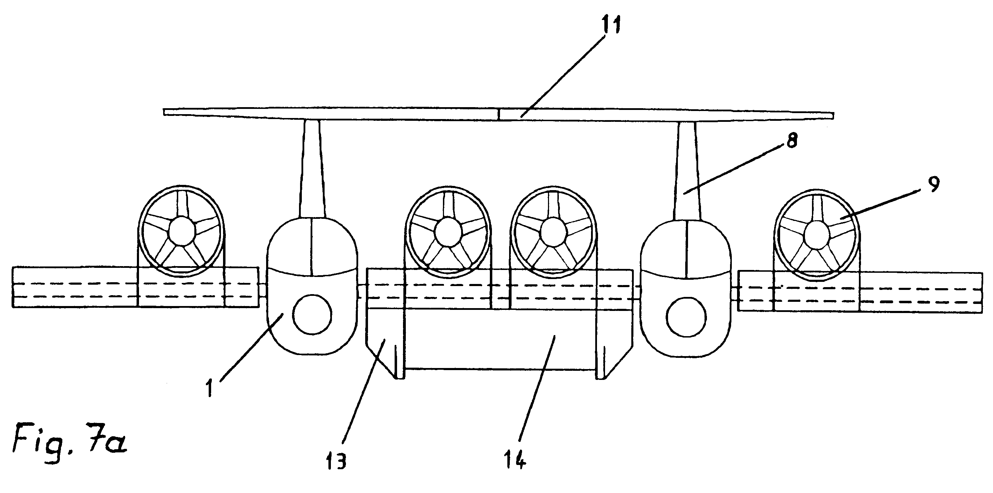

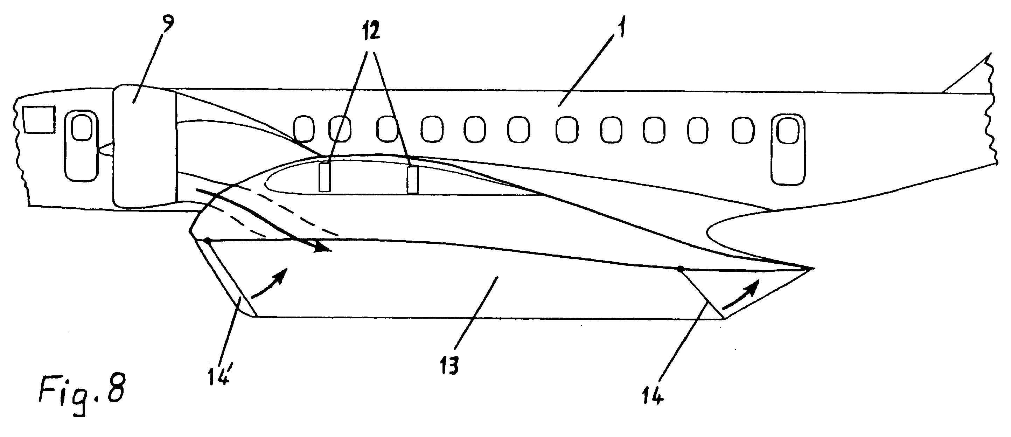

Ein besonders hoher Nutzeffekt wird erreicht durch die Anordnung von zwei Rümpfen in Katamaranbauweise, die mit einer Bodeneffekttragfläche miteinander verbunden werden, wie dies aus den Fig. 7, 7a und 8 ersichtlich ist. Die Spannweite des mittleren Teiles der Bodeneffekttragfläche 2 zwischen den Rümpfen 1 sollte dabei ca. 1/3 der Gesamtspannweite betragen. Auf beiden Außenseiten der Rümpfe 1 setzen sich die Bodeneffekttragflächen 2 wie bei einem Bodeneffektfahrzeug mit nur einem Rumpf 1, fort. Die an jedem Rumpf 1 befindlichen Seitenleitwerke 8 werden hierbei durch ein hochgesetztes Höhenleitwerk 11 miteinander verbunden.

Werden die Bodeneffektfahrzeuge in der Betriebsart Land/Land verwendet, so sind gesonderte Schwimmer nicht notwendig, da lediglich zu sichern ist, daß das Bodeneffektfahrzeug bei einer Notwasserung an der Wasseroberfläche bleibt. Für diesen Fall sind Teile der Bodeneffekttragflächen 2 als Hilfsschwimmer ausgebildet.

Es ist auch möglich, zur Aufriebserhöhung bei einer Notwasserung in Längsrichtung am gesamten Rumpf aufblasbare Gummiflächen vorzusehen, die aus mitgeführten Druckluftbehältern aufgeblasen werden.

Bedingt durch die niedrige Fluggeschwindigkeit ist es sinnvoll, die ursprünglichen Ruder zu vergrößern.

Die Triebwerksanordnung wird im Normalfall im mittleren Teil der Bodeneffekttragfläche 2 zwischen den Rümpfen 1 vorgesehen. Die Propeller der Fan-Triebwerke 9 (es können auch offene Propeller sein) werden über verlängerte Wellen von den vorteilhafterweise im Innenraum der Tragflächen angeordneten Triebwerken direkt angetrieben.

Für den Fall einer vorwiegend auf dem Wasser betriebenen Version ist anstelle des Fahrwerkes ein Luftkissen in der Form eines Luftkissenfahrzeuges (Hovercraft) oder eines Luftkissenfahrzeuges mit festen Seitenwänden 13 und gesteuerten Regelklappen 14 vorgesehen, wie dies bei "Surface-Effect-Ships" oder "Sidewall-Crafts" der Fall ist. (Fig. 7a, 8) Das Luftkissen wird dabei durch Umleitung eines Teiles der von den Fan-Triebwerken 9 erzeugten Luftströmung gebildet. Wie aus Fig. 7a ersichtlich ist, ist das Luftkissenfahrwerk 15 zwischen den Rümpfen 1 unterhalb der Bodeneffekttragfläche 2 angeordnet.

Die Verstellung der quer verlaufenden Klappen 14 erfolgt während der Start- und Landephase geschwindigkeitsabhängig.

Beim Start bleiben die Klappen 14 so lange geschlossen, bis der an der vorderen Klappe 14' entstehende Staudruck gleich oder höher ist, als der Innendruck im Luftkissen. Danach werden die Klappen 14 umgesteuert (geöffnet), so daß die Triebwerksleistung voll für die Beschleunigung des Bodeneffektfahrzeuges zur Verfügung steht. Die Klappensteuerung erfolgt bei der Landung in entsprechend umgekehrter Reihenfolge.

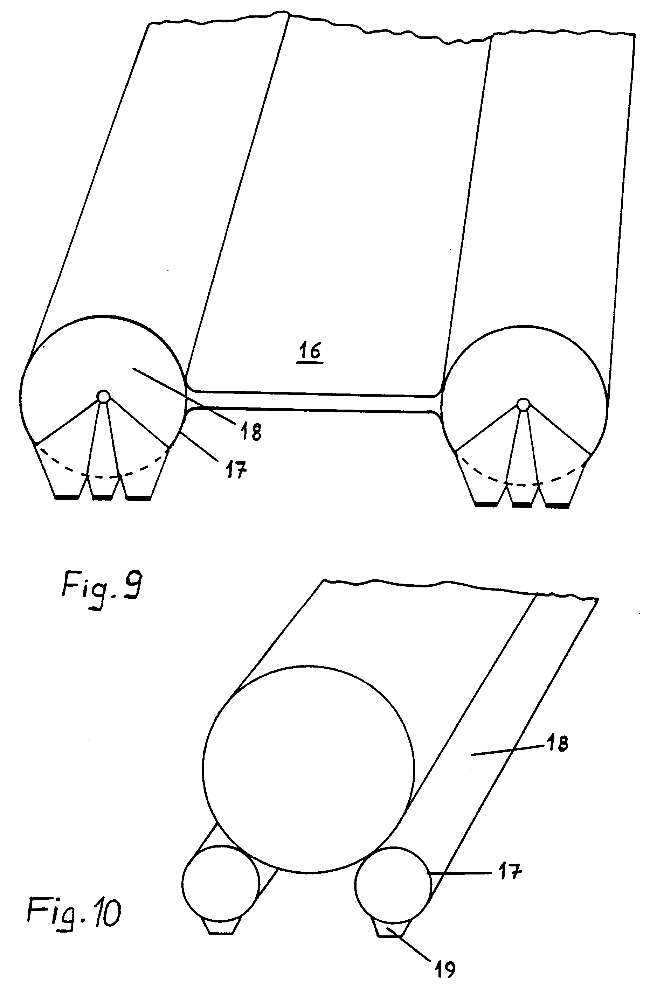

Aus den Fig. 9, 10 geht eine Variante der Bodeneffektfahrzeuge hervor, bei der als Fahrwerk unter dem Rumpf 1 ein Schlauchboot 16, bzw. schlauchbootähnliche Schwimmer montiert sind. Dieses Schlauchboot 16 besteht aus zwei oder mehreren aufblasbaren Auftriebskörpern 17, die mindestens eine Luftkammer 18, vorzugsweise aus Sicherheitsgründen jedoch mehrere mit Druckluft oder einem anderen Gas gefüllte Luftkammern 18 enthalten.

Das Schlauchboot 16, oder zumindest die Auftriebskörper 17 bestehen aus Gummi oder einem gummiverstärkten Gewebe, oder einem vergleichbaren elastischem reißfesten Kunststoffmaterial, o.dgl. Wie aus Fig. 10 ersichtlich, ist es auch möglich, anstelle des Schlauchbootes 16 einzelne Auftriebskörper 17 seitlich unten am Rumpf 1 zu befestigen.

Diese Art des Fahrwerkes ist für Bodeneffektfahrzeuge mit einem oder mehreren Rümpfen gleichermaßen geeignet, wobei es möglich ist, dieses Fahrwerk mit einem konventionellen einziehbaren Räderfahrwerk, oder dem Luftkissenfahrwerk zu kombinieren, wodurch das Bodeneffektfahrzeug unter allen denkbaren Umgebungsbedingungen und Bodenverhältnissen einsetzbar ist. Diese universelle Einsetzbarkeit erlaubt es, das Bodeneffektfahrzeug ohne besondere technische Vorkehrungen auf Wasser, oder auf teilweise verunreinigtem Wasser, auf Eis, auf teilweise gefrorenen Gewässern oder auf unpräparierten oder präparierten Schnee- oder Graspisten zu verkehren. Die Wasserflächen können dabei sogar Gewächse, wie Schilf, Gras, Seetang etc. aufweisen. Selbst auf grob präparierten Sandpisten (Wüstenpisten), oder auf Schlammpisten, auf denen mit einem konventionellen Fahrwerk nicht gestartet oder gelandet werden kann, können Bodeneffektfahrzeuge mit solchen Fahrwerken problemlos verkehren.

Das Schlauchboot 16 oder die einzelnen Auftriebskörper 17 können vorteilhaft mit dem in den Fig. 7a und 8 dargestellten Luftkissenfahrwerk kombiniert werden. Anstelle der starren Side-Walls sind in diesem Fall lediglich die Auftriebskörper 17 zu montieren, zwischen denen die Klappen 14 anzuordnen sind. Dadurch wird eine erhebliche Starterleichterung erreicht.

Durch die Verwendung des Schlauchbootes 16 oder der Auftriebskörper 17 als Fahrwerk wird gleichzeitig sichergestellt, daß bei Notwasserungen das nötige Auftriebsvolumen zur Verfügung steht.

Eine weitere Verbesserung des Fahrwerkes mit dem Schlauchboot 16 oder den Auftriebskörpern 17 wird erreicht, wenn zusätzliche Gleitkufen 19 vorgesehen werden, die längs unter die Auftriebskörper 17 montiert, oder fest mit der Außenhaut der Auftriebskörper 17 verbunden werden. Diese Gleitkufen 19 können aus einem elastischen bruchfesten Kunststoff bestehen, der möglichst gute Gleiteigenschaften aufweisen sollte. Diese Gleitkufen 19 sind in Fahrtrichtung vorn gesehen skiartig hochgezogen, so daß ein gutes Aufgleiten auf allen Oberflächen gewährleistet wird.

Diese Fortbildung hat den besonderen Vorteil, daß eine sehr gute Verteilung und Weiterleitung der beim Start und der Landung auf das Fahrwerk einwirkenden Kräfte auf den Rumpf des Bodeneffektfahrzeuges ermöglicht wird. Darüberhinaus gewährleistet ein solches Fahrwerk durch dessen Elastizität eine sehr gute Abfederung der beim Start und der Landung unvermeidlichen Stöße.

Mit den Bodeneffektfahrzeugen sind Geschwindigkeiten im Bodeneffekt bis zu ca. 400 km/h bei einer Flughöhe über Wasser von 10 bis 15 % der Spannweite der Tragflächen erreichbar, wobei die Reisegeschwindigkeit je nach Baugröße und Verwendungszweck zwischen 120 und 400 km/h wählbar ist.

Die vorstehend beschriebene Verwendung von gebrauchten Flugzeugrümpfen stellt die bevorzugte und kostengünstigste Ausführungsform dar. Es ist selbstverständlich auch möglich, die Bodeneffektfahrzeuge aus vollständig neuen Baugruppen zusammenzubauen.

Da die Bodeneffektfahrzeuge nicht am allgemeinen Luftverkehr teilnehmen, werden bestehende Luftstraßen entlastet und die Lärmbelastung in der Nähe von Flughäfen gemindert. Auf Grund der besonderen Auftriebsbedingungen im Bodeneffekt können die Triebwerksleistungen erheblich reduziert werden, wobei es absehbar ist, in Zukunft ökologisch sehr günstige Dieseltriebwerke oder Wasserstoffantriebe einzusetzen, die für Flugzeuge wegen der im Steigflug benötigten großen Treibstoffmengen und des höheren Gewichtes nicht einsetzbar sind.

### Bezugszeichenliste

- 1: Rumpf
- 2: Bodeneffekttragfläche
- 3: Leitwerksanordnung
- 4: Fahrwerk
- 5: Frachtraum
- 6: Tragfläche
- 7: Triebwerk
- 8: Seitenleitwerk
- 9: Fan-Triebwerk
- 10: Transportbehälter
- 11: Höhenruder
- 12: Hauptholm
- 13: Seitenwand
- 14: Regelklappen
- 15: Luftkissenfahrwerk
- 16: Schlauchboot
- 17: Auftriebskörper
- 18: Luftkammer
- 19: Gleitkufe

## Patentansprüche

1. Bodeneffektfahrzeug zum schnellen Transport von Personen und/oder Gütern mit wenigstens einem Rumpf (1), einem Fahrwerk und Bodeneffekttragflächen (2), einer Leitwerksanordnung (3) zur Richtungssteuerung und einer am Rumpf (1) und/oder den Tragflächen (2; 6) befindlichen Antriebsvorrichtung in Form von Propeller- oder Fan-Triebwerken (7; 9), **dadurch gekennzeichnet**, daß das Bodeneffektfahrzeug aus wenigstens einem Rumpf (1) eines Altflugzeugs besteht, daß die Bodeneffekttragflächen (2) unmittelbar an Teilen der vorhandenen Tragflächen (6) des Altflugzeugs oder wenigstens an den vorhandenen Holmen (12), diese umgeben, oder unterhalb der vorhandenen Tragflächen (6) des Altflugzeugs an diesen befestigt sind und daß das Fahrwerk (4; 15; 16) mit in der Start- und Landephase auftriebserhöhenden und/oder reibungsvermindernden Mitteln versehen ist.

2. Bodeneffektfahrzeug nach Anspruch 1, **dadurch gekennzeichnet,** daß die Bodeneffekttragflächen (2) ein Langsamflugprofil mit einer geraden Hinterkante aufweisen.

3. Bodeneffektfahrzeug nach Anspruch 1 und 2, **dadurch gekennzeichnet,** daß die Tragflächen (6) im Verhältnis zur Tiefe eine große Dicke aufweisen.

4. Bodeneffektfahrzeug nach Anspruch 1, **dadurch gekennzeichnet,** daß die Bodeneffekttragflächen (2) bei einem Tiefdecker anstelle der normalen Tragfläche (6) montiert sind.

5. Bodeneffektfahrzeug nach Anspruch 1, **dadurch gekennzeichnet,** daß die Bodeneffekttragflächen (2) bei einem Hochdecker unterhalb der vorhandenen Tragflächen (6) des Altflugzeuges montiert sind, wobei die Triebwerke (7, 9) auf den Tragflächen (6) angeordnet sind.

6. Bodeneffektfahrzeug nach den Ansprüchen 1 bis 4, **dadurch gekennzeichnet,** daß jeweils zwei oder mehr Bodeneffektflügel (2) in Tandemanordnung mit dem Rumpf (1) verbunden sind.

7. Bodeneffektfahrzeug nach einem der Ansprüche 1 bis 6, **dadurch gekennzeichnet,** daß zwei Rümpfe (1) katamaranartig durch Bodeneffekttragflächen (2) miteinander verbunden sind.

8. Bodeneffektfahrzeug nach Anspruch 7, **dadurch gekennzeichnet,** daß die Seitenleitwerke (8) bei einer katamaranartigen Rumpfanordnung durch ein hochgesetztes Höhenruder (11) miteinander verbunden sind.

9. Bodeneffektfahrzeug nach Anspruch 7 und 8, **dadurch gekennzeichnet,** daß die Antriebsmotoren der Triebwerke (7) wenigstens auf dem mittleren Tragflächenteil angeordnet sind und daß deren Propeller über verlängerte Antriebswellen angetrieben werden.

10. Bodeneffektfahrzeug nach einem der Ansprüche 1 bis 9, **dadurch gekennzeichnet,** daß unterhalb des Bodeneffektfahrzeuges ein Luftkissen zwischen festen Seitenwänden (13) mittels gesteuerter Regelklappen (14) ausgebildet wird, indem ein Teil des von den Triebwerken (7) erzeugten Luftstromes zwischen die Seitenwände (14) geleitet wird.

11. Bodeneffektfahrzeug nach Anspruch 10, **dadurch gekennzeichnet,** daß das Luftkissen an der vorderen Lufteintrittseite und an der hinteren Luftaustrittsseite mit quer verlaufenden schwenkbaren Regelklappen (14) begrenzt und gesteuert wird, wobei die Steuerung der quer angeordneten Regelklappen (14) geschwindigkeitsabhängig erfolgt.

12. Bodeneffektfahrzeug nach den Ansprüchen 1 bis 11, **dadurch gekennzeichnet**, daß unterhalb des Rumpfes (1) ein mit Auftriebskörpern (17) versehenes Schlauchboot (16) bzw. seitlich am Rumpf (1) angeordnete längs verlaufende Auftriebskörper (17) befestigt sind.

13. Bodeneffektfahrzeug nach Anspruch 12, **dadurch gekennzeichnet**, daß das Schlauchboot (16) und/oder die Auftriebskörper (17) aus einem reißfesten, hochbelastbarem Material bestehen.

14. Bodeneffektfahrzeug nach Anspruch 12 und 13, **dadurch gekennzeichnet**, daß die Auftriebskörper (17) auf deren Unterseite mit längs verlaufenden Gleitkufen (19) versehen sind.

## Claims

1. Ground-effect vehicle for the rapid transport of passengers and/or freight, with at least one fuselage (1), an undercarriage and ground-effect wings (2), a tail unit (3) for directional control and a drive system in the form of propeller or fan engines (7; 9) located on the fuselage (1) and/or the wings (2; 6), **characterised in that** the ground-effect vehicle consists of at least one fuselage (1) of an old airplane, in that the ground-effect wings (2) are fixed directly to parts of the existing wings (6) of the old airplane or at least to the existing spars (12), surround these, or are fixed on these below the existing wings (6) of the old airplane, and in that the undercarriage (4; 15; 16) is provided with means to increase buoyancy and/or reduce friction during the take-off and landing phase.

2. Ground-effect vehicle as per Claim 1, **characterised in that** the ground-effect wings (2) display a slow-speed flight section with a straight rear edge.

3. Ground-effect vehicle as per Claims 1 and 2, **characterised in that** the wings (6) display a great thickness in relation to the depth.

4. Ground-effect vehicle as per Claim 1, **characterised in that** the ground-effect wings (2) are mounted instead of the normal wing (6) on a low-wing airplane.

5. Ground-effect vehicle as per Claim 1, **characterised in that** the ground-effect wings (2) are mounted below the existing wings (6) of the old airplane on a high-wing airplane, with the engines (7, 9) being located on the wings (6).

6. Ground-effect vehicle as per Claims 1 to 4, **characterised in that** two or more ground-effect wings (2) are connected to the fuselage (1) in a tandem arrangement.

7. Ground-effect vehicle as per one of Claims 1 to 6, **characterised in that** two fuselages (1) are interconnected in catamaran style by ground-effect wings (2).

8. Ground-effect vehicle as per Claim 7, **characterised in that** the rudder units (8) on a catamaran-style fuselage arrangement are interconnected by an elevator (11) mounted above them.

9. Ground-effect vehicle as per Claims 7 and 8, **characterised in that** the drive motors of the engines (7) are arranged at least on the middle wing section and that their propellers are driven via extended drive shafts.

10. Ground-effect vehicle as per one of Claims 1 to 9, **characterised in that** an air cushion is formed below the ground-effect vehicle between fixed side walls (13) by means of adjustable control flaps (14) by part of the air flow generated by the engines (7) is directed between the side walls (13).

11. Ground-effect vehicle as per Claim 10, **characterised in that** the air cushion is bordered and controlled by transversely arranged, pivoting control flaps (14) on the front air inlet side and the rear air outlet side, the transversely arranged control flaps (14) being controlled as a function of speed.

12. Ground-effect vehicle as per Claims 1 to 11, **characterised in that** an inflatable raft (16) provided with floats (17), or longitudinally mounted floats (17) arranged on the side of the fuselage (1) is/are fixed below the fuselage (1).

13. Ground-effect vehicle as per Claim 12, **characterised in that** the inflatable raft (16) and/or the floats (17) is/are made of a tear-proof material capable of withstanding high loads.

14. Ground-effect vehicle as per Claims 12 and 13, **characterised in that** the underside of the floats (17) is provided with longitudinal skids (19).

## Revendications

1. Véhicule à effet de sol destiné au transport rapide de personnes et/ou de marchandises comprenant au moins un fuselage (1), un train de roulement et des surfaces portantes à effet de sol (2), un agencement de gouverne (3) pour la commande directionnelle et un dispositif d'entraînement situé sur le fuselage (1) et/ou sur les surfaces portantes (2 ; 6), sous la forme de groupes moteurs à hélice ou à turbine (7 ; 9), caractérisé en ce que le véhicule à effet de soi est constitué par au moins un fuselage (1) d'un ancien avion, en ce que les surfaces portantes à effet de sol (2) sont fixées directement sur des parties des surfaces portantes existantes (6) de l'ancien avion, ou bien sont au moins fixées sur les longerons existants (12) en entourant ceux-ci, ou encore au-dessous des surfaces portantes existantes (6) de l'ancien avion, et en ce que le train de roulement (4 ; 15 ; 16) est pourvu de moyens qui augmentent la portance dans la phase de décollage et d'atterrissage, et/ou de moyens qui réduisent la friction.

2. Véhicule à effet de sol selon la revendication 1, caractérisé en ce que les surfaces portantes à effet de sol (2) présentent un profil de vol lent avec une arête postérieur droite.

3. Véhicule à effet de sol selon l'une ou l'autre des revendications 1 et 2, caractérisé en ce que les surfaces portantes (6) présentent une forte épaisseur par comparaison à la profondeur.

4. Véhicule à effet de soi selon la revendication 1, caractérisé en ce que les surfaces portantes à effet de sol (2) sont montées à la place des surfaces portantes normales (6) dans le cas d'un avion à aile basse.

5. Véhicule à effet de soi selon la revendication 1, caractérisé en ce que [es surfaces portantes à effet de sol (2) sont montées au-dessous des surfaces portantes existantes (6) de l'ancien avion dans le cas d'un avion à aile haute, et en ce que les groupes moteurs (7, 9) sont agencés sur les surfaces portantes (6).

6. Véhicule à effet de sol selon les revendications 1 à 4, caractérisé en ce que deux ailes à effet de sol (2) respectives ou plus sont reliées au fuselage (1) suivant un agencement en tandem.

7. Véhicule à effet de soi selon l'une des revendications 1 à 6, caractérisé en ce que deux fuselages (1) sont reliés l'un à l'autre à la manière d'un catamaran, par des surfaces portantes à effet de sol (2).

8. Véhicule à effet de sol selon la revendication 7, caractérisé en ce que les gouvernes latérales (8), dans le cas d'un agencement de fuselage à la manière d'un catamaran, sont reliées l'une à l'autre par une gouverne de profondeur haute (11).

9. Véhicule à effet de sol selon les revendications 7 et 8, caractérisé en ce que les moteurs d'entraînement des groupes propulseurs (7) sont agencés au moins sur la partie médiane de surfaces portantes, et en ce que leurs hélices sont entraînées par l'intermédiaire d'arbres d'entraînement prolongés.

10. Véhicule à effet de sol selon l'une des revendications 1 à 9, caractérisé en ce qu'il se forme au-dessous du véhicule à effet de sol un coussin d'air entre des parois latérales fixes (13) au moyen de volets de régulation commandés (14), par le fait qu'une partie du courant d'air produit par les groupes propulseurs (7) est guidé entre les parois latérales (14).

11. Véhicule à effet de sol selon la revendication 10, caractérisé en ce que le coussin d'air est limité et commandé au niveau du côté d'entrée d'air antérieur et au niveau du côté de sortie d'air postérieur au moyen de volets de réglage basculants (14) qui s'étendent transversalement, et en ce que la commande des volets de régulation transversaux (14) a lieu en fonction de la vitesse.

12. Véhicule à effet de sol selon l'une des revendications 1 à 11, caractérisé en ce qu'au au-dessous du fuselage (1) est fixée une embarcation gonflable (16) pourvue de corps de flottement (17), ou bien en ce que des corps de flottement (17) agencés longitudinalement sont fixés latéralement sur le fuselage (1).

13. Véhicule à effet de sol selon la revendication 12, caractérisé en ce que l'embarcation gonflable (16) et/ou les corps de flottement (17) sont réalisés en un matériau résistant à l'attachement et capable de supporter de fortes charges.

14. Véhicule à effet de sol selon l'une ou l'autre des revendications 12 et 13, caractérisé en ce que les corps de flottement (17) sont pourvus à leur face inférieure de patins de coulissement (19) qui s'étendent longitudinalement.
